# EUROPEAN PATENT SPECIFICATION

(11) **EP 1 726 505 B1**
(45) Date of publication and mention of the grant of the patent: **19.12.2007**
(21) Application number: 06113993.7
(22) Date of filing: 16.05.2006
(51) Int. Cl.: B61F 5/14, B60G 11/32, B61F 5/22

(54) **Air spring**
Luftfeder
Ressort pneumatique

(30) Priority: 25.05.2005 JP 2005151742
(43) Date of publication of application: 29.11.2006
(73) Proprietor: Toyo Tire & Rubber Co. Ltd., Osaka-shi, Osaka (JP)
(72) Inventor: Hayashi, Hiroshi, Osaka Osaka (JP)
(74) Representative: Fleuchaus, Michael A.

(56) References cited:
- WO-A-20/04109149
- DE-A1- 2 305 878
- DE-A1- 3 144 930
- DE-U1- 20 018 194
- PATENT ABSTRACTS OF JAPAN vol. 2002, no. 11, 6 November 2002 (2002-11-06) & JP 2002 206582 A (SUMITOMO ELECTRIC IND LTD; KAWASAKI HEAVY IND LTD), 26 July 2002 (2002-07-26)

## Description

### Background of the Invention

### 1. Field of the invention

The present invention relates to an air spring which is mainly used while being interposed between a bogie of a railway vehicle and the vehicle.

### 2. Explanation of Related Art

As one kind of air springs which are useful in European railway vehicles and the like, there is a structure which has a stopper (support member) having a truncated conical shape inside a bellows (diaphragm). Usually, the stopper having a truncated conical shape is called "conical stopper". As a conventional example of an air spring having such a structure, known is an air spring disclosed in the drawings (Fig. 4) of Japanese Patent Application Laying-Open No. 2002-206582.

Namely, an air spring of the conical stopper type has: an outer cylinder; an inner cylinder; a diaphragm which is placed across the two cylinders; a support member which has an outer peripheral face configured by a conical face or a pyramidal face; and an annular elastic body which is placed across the outer peripheral face of the support member and the inner cylinder. In a usage state where the air spring is incorporated into a railway vehicle, usually, a situation arises in which the diaphragm and the elastic body serially receive the load, and the air spring functions as a shock absorber having a relatively soft (comfortable) spring constant. In case of a heavy load due to deflation or the like, however, there arises a situation in which the load is supported only by the elastic body.

Therefore, the elastic body is requested to exert the shock absorbing function due to elastic support even in case of such a heavy load. However, it is difficult to design such a configuration because of the following reason. When a soft spring constant suitable for a usual normal operation of an air spring is set, a state of a hard spring constant suitable for a heavy load cannot be attained. By contrast, when a hard spring constant suitable for a heavy load is set, the shock absorbing function in a usual state is inferior.

In order to comply with the problem, it is possible to obtain a structure in which an elastic body is configured by plural annular rubber members having different spring constants to provide a certain degree of so-called nonlinear characteristics (progressive characteristics) so that the spring constant is larger (harder) as the load is heavier. In order to increase the spring constant, however, it is required to compress this structure to a degree at which an annular rubber member having a small spring constant becomes an approximate rigid body (the part is deformed more than the elastic limit). Therefore, the structure has disadvantages such as that a large distortion is produced and the structure easily collapses, and that the durability is impaired, and hence is hardly realized. Consequently, it is a situation that there is room for further improvement in an air spring of the conical stopper type.

### Summary of the Invention

It is an object of the invention to improve an air spring comprising a support member having a truncated conical or truncated pyramidal outer peripheral face so that an annular elastic body placed across the outer peripheral face of the support member and an inner cylinder has nonlinear characteristics which allows the elastic body to, in a usual normal operation, have soft spring characteristics, and to, in a heavy load, be stiff so as to exert hard spring characteristics.

The first invention is characterized in that, in an air spring having: an outer cylinder 1; an inner cylinder 2; a diaphragm 3 which is placed across the two cylinders 1, 2; a support member 4 which has an outer peripheral face 4a configured by a conical face or a pyramidal face; and an annular elastic body 5 which is placed across the outer peripheral face 4a of the support member 4 and the inner cylinder 2, a shock-absorbing member 12 having an elastic member 11 is placed between the inner cylinder 2 and the support member 4, and a state where elastic deformation of the elastic member 11 due to relative approach movement between the inner cylinder 2 and the support member 4 is started after the elastic body 5 is elastically deformed by a predetermined amount is configured.

According to the first invention, the air spring is configured so that the shock-absorbing member formed by the elastic member is placed between the inner cylinder and the support member, and the state is configured where elastic deformation of the elastic member due to relative approach movement between the inner cylinder and the support member is started after the elastic body is elastically deformed by a predetermined amount. As described in detail in the paragraph of embodiments, when a load acting on the outer cylinder is heavier than a predetermined level, therefore, the elasticity due to the shock-absorbing member is added in parallel to the elasticity due to the elastic body, so that the spring constant can be increased without effort. According to the configuration, a state where the air spring has soft spring characteristics due to a small spring constant can be obtained until the load is increased to a certain degree, and, when a heavy load is applied, the air spring can be switched to a state where the air spring has hard spring characteristics due to a large spring constant.

As a result, in an air spring comprising a support member having an outer peripheral face configured by a truncated conical face or a truncated pyramidal face, the annular elastic body which is placed across the outer peripheral face of the support member and the inner cylinder can be improved so as to have nonlinear characteristics which allows the elastic body to, in a usual normal operation, have soft spring characteristics, and to, in a heavy load, be stiff so that the whole elastic body exerts hard spring characteristics.

The second invention is characterized in that, in the air spring of the first invention, the shock-absorbing member 12 is supported by the inner cylinder 2, and an adequate gap X is formed between the shock-absorbing member 12 and the support member 4.

According to the second invention, the configuration in which the gap is disposed between the shock-absorbing member supported by the inner cylinder and the support member realizes "the state where elastic deformation of the elastic member due to relative approach movement between the inner cylinder and the support member is started after the elastic body is elastically deformed by a predetermined amount" in the first invention. In this configuration, the inner cylinder which is a sprung weight with respect to the elastic body supports the shock-absorbing member. As compared with the case where the shock-absorbing member is disposed on the support member, therefore, the unsprung weight can be reduced, and an advantage that the performance of a shock-absorbing apparatus (air spring) can be correspondingly improved is added.

The third invention is characterized in that, in the air spring of the first or second invention, a state where the support member 4 directly butts against the inner cylinder 2 in accordance with that the elastic member 11 is elastically deformed to a certain degree is configured.

According to the third invention, as described in detail in the paragraph of embodiments, it is possible to provide means for, when a load heavier than the heavy load conditions in which the elasticity of the shock-absorbing member is added is applied, causing the support member to directly butt against the inner cylinder to eliminate the shock absorbing function. Namely, the invention is useful in the case where, when an excessive load is applied, a rigid state (a metal contact state which will be described later) is set so as to prevent further elastic deformation (deflection) from occurring, thereby avoiding disadvantages due to an excess posture change. The invention is effective in the case where deflection higher than a certain level is limited in, for example, a vehicle.

The fourth invention is characterized in that, in the air spring of the third invention, the shock-absorbing member 12 is configured by: the elastic member 11 which is supported by the inner cylinder 2; and an inelastic member 10 which is supported by the elastic member 11 in a state where a predetermined gap Y is formed between the inelastic member and the inner cylinder 2, and the support member 4 is buttable against the inner cylinder 2 through the inelastic member 10.

According to the fourth invention, the shock-absorbing member is configured by: the elastic member which is supported by the inner cylinder; and the inelastic member which is supported by the elastic member in the state where the predetermined gap is formed between the inelastic member and the inner cylinder, thereby realizing the state of the third invention where "the support member directly butts against the inner cylinder in accordance with that the elastic member is elastically deformed to a certain degree". According to the configuration, the shock-absorbing member which is used for increasing the spring constant to obtain nonlinear characteristics is used also as the configuration for causing the support member to directly butt against the inner cylinder. Therefore, the space and the cost can be correspondingly reduced, and there is an advantage that the effects of the third invention are attained rationalistically and economically.

The fifth invention is characterized in that, in the air spring of the fourth invention, the inelastic member 10 is formed by a metal material approximately showing a truncated conical shape or a truncated pyramidal shape, and the elastic member 11 is formed by an annular rubber member which is placed across a conical or pyramidal outer peripheral face 10a of the metal material, and the inner cylinder 2.

According to the fifth invention, the elastic member constituting the shock-absorbing member is placed on the conical or pyramidal outer peripheral face of the inelastic member, and hence the elastic deformation due to approach of the support member acts not only in the approaching direction, but also in a direction perpendicular to the approaching direction. As a result, a function of, even when a heavy load is applied, preventing the axes of the support member and the inner cylinder from deviating from each other, or the so-called self-aligning function is exerted. Therefore, a high-quality air spring which stably exerts the shock absorbing function can be provided.

The sixth invention is characterized in that, in the air spring of any one of the first to fifth inventions, the elastic body 5 is a laminated rubber member in which annular rubber materials 5A to 5C and annular metal plates 5a, 5b are alternately laminated.

According to the sixth invention, the elastic body is configured by the laminated rubber member, whereby the support member and the inner cylinder can be stably elastically supported by each other.

### Brief Description of the Drawings

Fig. 1 is a section view showing the structure of an air spring of Embodiment 1;

Fig. 2 is a view showing a spring characteristic graph of the air spring of Fig. 1; and

Fig. 3 is a section view showing the structure of an air spring of Embodiment 2.

### Description of the Preferred Embodiments

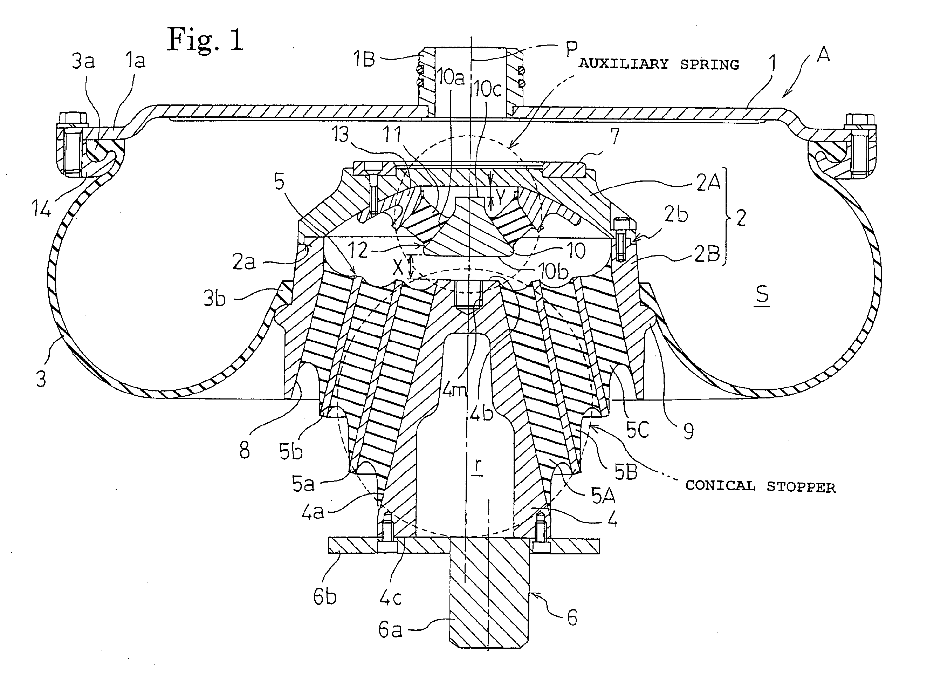

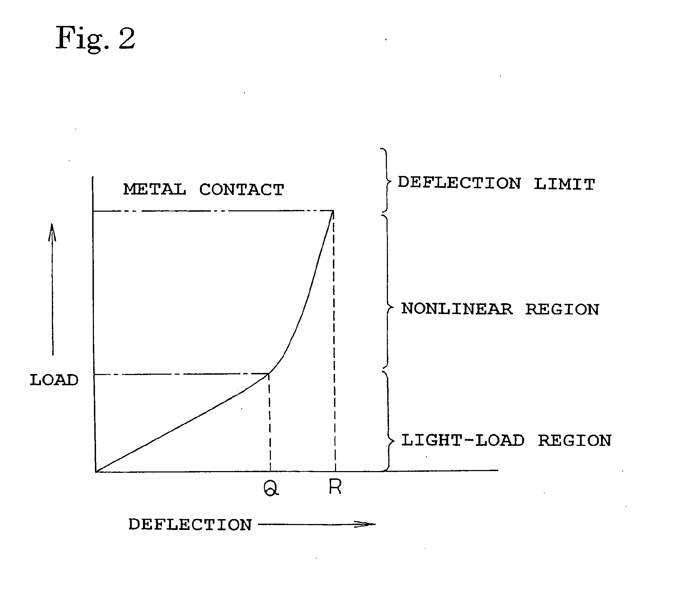

Hereinafter, embodiments of the air spring of the invention will be described with reference to the accompanying drawings. Fig. 1 is a section view showing the structure of the air spring, and Fig. 2 is a view showing a graph of "load-deflection" of the air spring. The air spring of the invention is mainly placed in each of right and left sides of a bogie in a railway vehicle, and functions as a device for supporting the vehicle body which is placed above the air spring.

[Embodiment 1]

A air spring A of Embodiment 1 has: a substantially disk-like outer cylinder 1 which is to be fixed to a supported body (not shown) such as a passenger carriage; an inner cylinder 2 consisting of an upper lid portion 2A and a cylindrical ring portion 2B; a diaphragm (bellows) 3 which is placed across the two members 1, 2; a support member 4 which has an outer peripheral face 4a configured by a conical face; and an annular elastic body 5 which is placed across the outer peripheral face 4a of the support member 4 and the inner cylinder 2. The air spring is usually called "conical stopper type air spring". An attachment member 6 which is to be attached to a bogie (not shown), and which is configured by a columnar part 6a and a planar part 6b is bolted to the lower face of the support member 4.

The upper lid portion 2A is formed by a metal member or the like having an inverted dish-like shape. A flat annular elastic stopper 7 is screwed to the upper face of the portion. The elastic stopper 7 is placed so as to exert a shock absorbing function of, under a heavy load or the like, preventing the upper lid portion 2A from directly butting against the metal outer cylinder 1. The ring portion 2B has a tapered inner peripheral face 8 which is inclined so that the diameter is more slightly increased as further downward advancing, and an annular projection 9 for lockingly fitting the diaphragm 3 is formed on the outer peripheral face. The upper lid portion 2A and the ring portion 2B have annular step portions 2a, 2b which are to be fitted to each other, respectively, and, in a state where they have a common axis P, are integrally coupled with each other by bolting to be configured as the inner cylinder 2.

In the outer cylinder 1, the outer diameter end is formed as an attachment outer peripheral portion 1a which is slightly lowered in level. A large-diameter side peripheral end 3a of the diaphragm 3 is airtightly interposed and attached by using the attachment outer peripheral portion 1a and an attachment ring 14 which is attached to the lower face of the portion by bolting, and which is an approximately hook-like section shape. A small-diameter side peripheral end 3b of the diaphragm 3 is airtightly fitted and attached onto the ring portion 2B and above the annular projection 9 in a state where it extends along the annular projection. According to the configuration, the internal space S of the diaphragm 3 is airtightly isolated from the outside, so as to perform the shock absorbing function (air cushion) due to compression of air. It may be possible to employ a configuration where air is introduced into and discharged from the diaphragm 3 via a boss portion 1B integrated with a center portion of the outer cylinder 1, to adjust the hardness of the air cushion.

The support member 4 has a truncated conical shape which is lightened by boring the member to form an internal space r which downward opens, and has: the above-mentioned outer peripheral face 4a having a conical face; a tip end top portion 4b which is circular (annular) and flat; and a ring-like bottom face 4c. When an internal thread portion 4m is formed in the tip end top portion 4b, there is an advantage that it is possible to attach a shock-absorbing member which functions when the support member 4 rises and butts against an intermediate stopper 10 (described later).

The elastic body 5 is configured as a laminated rubber member which consists of inner and outer triple elastic layers, namely, first to third elastic layers 5A, 5B, 5C, and inner and outer double partition layers, namely, first and second partition layers 5a, 5b that are formed by metal plates, and that are interposed between the elastic layers.
The elastic layers 5A, 5B, 5C and the partition layers 5a, 5b are annular. The inner peripheral face of the first elastic layer 5A is fixed to the outer peripheral face 4a of the support member 4 by vulcanization bonding or other means, and the outer peripheral face of the third elastic layer 5C is fixed to the tapered inner peripheral face 8 of the inner cylinder 2 by vulcanization bonding or other means. Namely, the support member 4 and the inner cylinder 2 are coupled and integrated with each other via the elastic body 5.

The outer peripheral face 4a and the tapered inner peripheral face 8 are formed as inclined peripheral faces which are parallel or substantially parallel to each other, and which have a steep inclination angle. The first to third elastic layers 5A, 5B, 5C have the identical or a substantially identical radial thickness. The effective widths (vertical widths) of the elastic layers are set so that the first elastic layer 5A is widest, the third elastic layer 5C is narrowest, and the second elastic layer 5B has an intermediate value. Therefore, the width of the first partition layer 5a is larger than that of the second partition layer 5b. The three elastic layers 5A, 5B, 5C are different from one another in effective width, and hence have different spring constants, so that the elastic layers have slightly nonlinear spring characteristics.

As shown in Fig. 1, the shock-absorbing member 12 having an elastic member 11 is placed in the vertical space between the inner cylinder 2 and the support member 4, and a state where elastic deformation of the elastic member 11 due to relative approach movement between the inner cylinder 2 and the support member 4 is started after the elastic body 5 is elastically deformed by a predetermined amount is configured. The shock-absorbing member 12 is configured by: the intermediate stopper (an example of the inelastic member) 10 which is made of a metal material, and which has a approximately truncated conical shape; and the elastic member 11 which consists an annular rubber member, and which extends across the conical face 10a of the stopper and an annular attachment table 13 fixed to the lower face of the upper lid portion 2A.

In the air spring A, all of the outer cylinder 1, the inner cylinder 2, the shock-absorbing member 12, the support member 4, and the elastic body 5 are placed in a state where they have the common axis P. In the free state, a gap of a distance X is vertically formed between the tip end top portion 4b and the lower face 10b of the intermediate stopper 10, and a gap of a distance Y is vertically formed between the top face 10c of the intermediate stopper 10 and the upper lid portion 2A. In the specification, the structure of the portion of the support member 4 enclosed by the broken line circle is referred to as "conical stopper", and the structure of the portion of the shock-absorbing member 12 enclosed by the other broken line circle is referred to as "auxiliary spring".

Next, the function and operation of the air spring A will be described. For example, the case where the air spring A is incorporated in a railway vehicle in which the attachment member 6 is attached to a bogie and the outer cylinder 1 is attached to a passenger carriage will be considered. In a usual normal usage state (appropriate load state), the elasticity of the air cushion due to the enclosed air in the diaphragm 3, and the elasticity due to the elastic body 5 (the bellows and the conical stopper) act in series as a spring system, and a soft cushion state in which the performance of the lower-spring constant member appears is produced. In this state, the vertical gap exists between the tip end top portion 4b and the lower face 10b, and the support member 4 does not butt against the intermediate stopper 10.

Next, when a heavy load is applied by an any cause (for example, puncture "deflation" of the diaphragm 3), the elastic stopper 7 butts against the outer cylinder 1 to cause the air cushion to fail to operate, and a cushion state which is substantially due to only the elastic body 5 is produced. At this time, although the load characteristics of the elastic body 5 due to the laminated rubber are set to be slightly nonlinear, when the load is increased, the elastic body cannot withstand the load, and the support member 4 butts against the intermediate stopper 10 to cause the elasticity of the elastic body 5 and that of the elastic member 11 (the conical stopper and the auxiliary spring) to act in parallel as spring systems. As a result, the spring constants are added to each other, and a hard cushion state is produced.

As shown in the nonlinear characteristic graph of Fig. 2, until point Q where the support member 4 butts against the intermediate stopper 10, a "load-deflection" relation graph due to only the elasticity of the elastic body 5 is attained, and, after passing through point Q, a "load-deflection" relation graph due to both the elasticity of the elastic body 5 and that of the elastic member 11 is produced, so as to obtain a curve of nonlinear (progressive) characteristics in which the rate of increase of the moving distance (rising distance) of the support member 4 is lower as the load is heavier. This state continues until point R where the intermediate stopper 10 butts against the inner cylinder 2. When the load is further increased, the intermediate stopper 10 finally butts against the upper lid portion 2A, or the inner cylinder 2 to produce a non-shock absorbing state (metal contact state: so-called rigid state), thereby causing "DEFLECTION LIMIT" state where further deflection is inhibited. In a railway vehicle, for example, a passenger carriage is restricted from being laterally inclined at a predetermined angle or more.

In summary, it is possible to realize the air spring A having preferred characteristics in which, when the load is light, substantially linear and soft spring characteristics produce a comfortable state (the light-load region in Fig. 2), and, when the load is heavy, the spring constant is increased to produce resistant and stiff spring characteristics (the nonlinear region in Fig. 2), and, when the load is heavier, deflection is limited by metal contact.

When the vertical distance X between the support member 4 and the intermediate stopper 10 is adequately set, the nonlinear region [the region where the shock-absorbing member 12 (auxiliary spring) acts] of the graph shown in Fig. 2 can be freely set, and the light-load region can be freely set. As a result, an effect that the spring characteristics can be set in accordance with conditions to be applied. For example, when the air spring is used in a railway passenger vehicle, the light-load region is widened to set the air spring as an air spring A which provides comfortable riding, and, when the air spring is used in a railway freight vehicle, the nonlinear region is widened to set the air spring as an air spring A which can withstand a heavy load, and which has a high load capacity.

The nonlinear characteristics of the air spring A shown in Fig. 2 can be freely set by changing the rubber hardnesses of the elastic body 5 (the first to third elastic layers 5A, 5B, 5C) and the shock-absorbing member 12 (the elastic member 11). Namely, the spring constants in the light-load region and the nonlinear region can be adequately set to, for example, be soft or hard. This setting does not involve a shape change, and hence the investment for the production facility can be reduced. Consequently, there is an advantage that further cost reduction is enabled as compared with the case where a shape change is involved.

In the case where the vertical distance Y between the intermediate stopper 10 and the inner cylinder 2 is adequately set, when a load which is heavier than a predetermined level is applied, a state (metal contact state) where the support member 4 directly butts against the inner cylinder 2 is set, so that the spring function due to the elastic body 5 and the elastic member 11 can be suppressed or restricted. As described above, this is effective means for limiting deflection in a railway vehicle or the like, so as not to exceed a certain level.

[Embodiment 2]

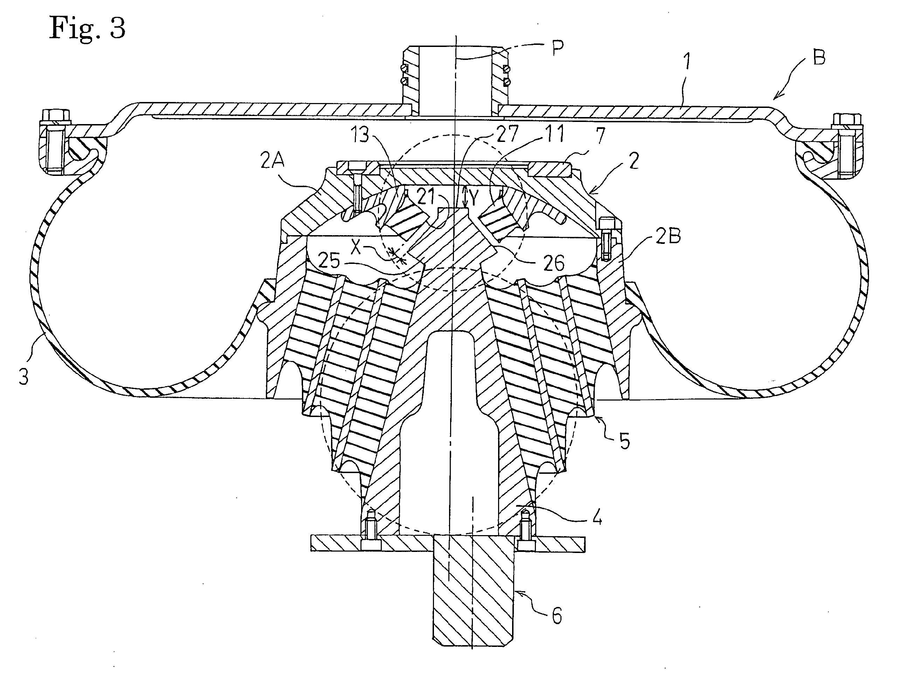

The air spring may be an air spring B of Embodiment 2. As shown in Fig. 3, the air spring has a structure having a support member 4 in which the support member 4 in the air spring A shown in Fig. 1 is integrated with the intermediate stopper 10, and is identical with the air spring A except the structure of the auxiliary spring portion. In this case, the shock-absorbing member 12 is configured only by the annular elastic member 11, and, in the free state, a predetermined gap X is formed between a conical outer peripheral face 26 of an intermediate stopper portion 25 in the support member 4 and an inner peripheral face 21 of the elastic member 11, and a gap Y which is larger than the gap X is vertically formed between an upper end face 27 of the support member 4 and the upper lid portion 2A.

When the load is increased, the gap X first eliminated, and the intermediate stopper portion 25 butts against the elastic member 11 to produce spring characteristics of the nonlinear region where the spring constant is enlarged. When the load is further increased, the upper end face 27 butts against the lower face of the upper lid portion 2A to set the metal contact state, with the result that spring characteristics similar to those of the air spring A of Embodiment 1 are exerted. Namely, a state where elastic deformation of the elastic member 11 due to relative approach movement between the inner cylinder 2 and the support member 4 is started after the elastic body 5 is elastically deformed by a predetermined amount is configured, and a state where the support member 4 directly butts against the inner cylinder 2 in accordance with that the elastic member 11 is elastically deformed to a certain degree is configured.

[Other embodiments]

The elastic member 11 of the shock-absorbing member 12 may be configured by any elastic portion, and may be made of a polymer resin such as rubber or urethane, or a metal member. Alternatively, the elastic member may be a solid of a polymer resin. The outer peripheral face 4a of the support member 4, and the outer peripheral face 10a of the intermediate stopper 10 may be configured by a pyramidal face. The inclination angle of the outer peripheral face 4a of the support member 4 may not be coincident with that of the inner peripheral face 8 of the inner cylinder 2. Each of the elastic body 5 and the elastic member 11 may have a structure in which plural members are arranged in a circumferential direction at even angles or at uneven angles.

## Claims

1. An air spring having: an outer cylinder (1); an inner cylinder (2); a diaphragm (3) which is placed across said two cylinders (1, 2); a support member (4) which has an outer peripheral face (4a) configured by a conical face or a pyramidal face; and an annular elastic (5) body which is placed across said outer peripheral face (4a) of said support member (4) and said inner cylinder (2), **characterized in that** a shock-absorbing member (12) having an elastic member (11) is placed between said inner cylinder (2) and said support member (4), and **in that** a state is defined where elastic deformation of said elastic member (11) due to relative approach movement between said inner cylinder (2) and said support member (4) is started after said elastic body (5) is elastically deformed by a predetermined amount.

2. An air spring according to claim 1, wherein said shock-absorbing member (12) is supported by said inner cylinder (2), and an adequate gap is formed between said shock-absorbing member (12) and said support member (4).

3. An air spring according to claim 1 or 2, wherein a state is defined where said support member (4) directly butts against said inner cylinder (2) in accordance with that said elastic member (11) is elastically deformed to a certain degree.

4. An air spring according to claim 3, wherein said shock-absorbing member (12) is configured by said elastic member (11) which is supported by said inner cylinder (2), and an inelastic member (10) which is supported by said elastic member (11) in a state where a predetermined gap is formed between said inelastic member (10) and said inner cylinder (2), and said support member (4) is buttable against said inner cylinder (2) through said inelastic member (10).

5. An air spring according to claim 4, wherein said inelastic member (10) is formed by a metal material approximately showing a truncated conical shape or a truncated pyramidal shape, and said elastic member (11) is formed by an annular rubber member which is placed across a conical or pyramidal outer peripheral face of said metal material, and said inner cylinder (2).

6. An air spring according to any one of claims 1 to 5, wherein said elastic body (5) is a laminated rubber member in which annular rubber materials and annular metal plates are alternately laminated.

## Patentansprüche

1. Luftfeder, welche Folgendes aufweist: einen äußeren Zylinder (1); einen inneren Zylinder (2), ein Diaphragma (3), welches zwischen den beiden Zylindern (1, 2) angeordnet ist; ein Stützelement (4), welches eine äußere Umfangsfläche (4a) aufweist, die durch eine konische Fläche oder eine pyramidenförmige Fläche ausgestaltet ist; und einen ringförmigen, elastischen (5) Körper, welcher über die äußere Umfangsfläche (4a) des Stützelements (4) und den inneren Zylinder (2) angeordnet ist;
**dadurch gekennzeichnet, dass**
ein stoßdämpfendes Element (12) mit einem elastischen Element (11) zwischen dem inneren Zylinder (2) und dem Stützelement (4) angeordnet ist und ein Zustand gestaltet ist, in welchem elastische Verformung des elastischen Elements (11) aufgrund von relativer Annäherungsbewegung zwischen dem inneren Zylinder (2) und dem Stützelement (4) einsetzt, nachdem der elastische Körper (5) elastisch um einen vorbestimmten Betrag verformt ist.

2. Luftfeder gemäß Anspruch 1, wobei das stoßdämpfende Element (12) durch den inneren Zylinder (2) gestützt wird und ein angemessener Zwischenraum zwischen dem stoßdämpfenden Element (12) und dem Stützelement (4) ausgebildet ist.

3. Luftfeder gemäß Anspruch 1 oder 2, wobei ein Zustand gestaltet ist, in welchem das Stützelement (4) in Übereinstimmung damit, dass das elastische Element (11) zu einem bestimmten Grad elastisch verformt ist, direkt gegen den inneren Zylinder (2) anstößt.

4. Luftfeder gemäß Anspruch 3, wobei das stoßdämpfende Element (12) ausgestaltet ist durch: das elastische Element (11), welches von dem inneren Zylinder (2) gestützt wird; und ein unelastisches Element (10), welches von dem elastischen Element (11) in einem Zustand gestützt wird, in welchem ein vorbestimmter Zwischenraum zwischen dem unelastischen Element (10) und dem inneren Zylinder (2) ausgebildet ist, und wobei das Stützelement (4) durch das unelastische Element (10) zum Anstoßen gegen den inneren Zylinder (2) gebracht werden kann.

5. Luftfeder gemäß Anspruch 4, wobei das unelastische Element (10) durch ein Metallmaterial ausgebildet ist, welches ungefähr die Form eines Kegelstumpfes oder die Form eines Pyramidenstumpfes aufweist, und das elastische Element (11) durch ein ringförmiges Gummielement ausgebildet ist, welches über eine konische oder pyramidenförmige äußere Umfangsfläche des Metallmaterials und den inneren Zylinder (2) angeordnet ist.

6. Luftfeder gemäß einem der Ansprüche 1 bis 5, wobei der elastische Körper (5) ein schichtweise aufgebautes Gummielement ist, in dem ringförmige Gummimaterialien und ringförmige Metallplatten abwechselnd schichtweise angeordnet sind.

## Revendications

1. Un ressort cylindrique ayant : un cylindre extérieur (1) ; un cylindre intérieur (2) ; un diaphragme (3) qui est placé entre deux cylindres (1,2) ; un membre support (4) qui a une face périphérique extérieure (4a) configurée par une face conique ou une face pyramidale ; et un corps élastique annulaire (5) qui est placé entre ladite face périphérique extérieure (4a) dudit membre support (4) et ledit cylindre intérieur (2),
**caractérisé en ce que**
un membre amortisseur de choc (12) ayant un membre élastique (11) est placé entre ledit cylindre intérieur (2) et ledit membre support (4) et **en ce que** un état est défini où une déformation élastique dudit membre élastique (11) due à un mouvement d'approche relatif entre ledit cylindre intérieur (2) et ledit membre support (4) ait lieu après que ledit corps élastique (5) soit élastiquement déformé par un montant prédéterminé.

2. Un ressort cylindrique selon la revendication 1, où ledit membre amortisseur de choc (12) est supporté par ledit cylindre intérieur (2) et un espace adéquat est formé entre ledit membre amortisseur de choc (12) et ledit membre support (4).

3. Un ressort cylindrique selon la revendication 1 ou 2, où un état est défini où ledit membre support (4) bute contre ledit cylindre intérieur (2) conformément à ce que le membre élastique (11) est élastiquement déformé à un certain degré.

4. Un ressort cylindrique selon la revendication 3, où ledit membre amortisseur de choc (12) est configuré par ledit membre élastique (11) qui est supporté par ledit cylindre intérieur (2) et un membre inélastique (10) qui est supporté par ledit membre élastique (11) dans un état où un espace prédéterminé est formé entre ledit membre inélastique (10) et ledit cylindre intérieur (2), et ledit membre support (4) peut être buter contre ledit cylindre intérieur (2) à travers ledit membre inélastique (10).

5. Un ressort cylindrique selon la revendication 4 où ledit membre inélastique (10) est formé par un matériau métallique montrant approximativement une forme conique tronquée ou une forme pyramidale tronquée et ledit membre élastique (11) est formé par un membre caoutchouc annulaire qui est placé entre une face périphérique extérieure pyramidale ou conique dudit matériau métallique, et ledit cylindre intérieur.

6. Un ressort cylindrique selon l'une quelconque des revendications 1 à 5, où ledit corps élastique (5) est un membre de caoutchouc stratifié dans lequel les matériaux de caoutchouc annulaires et les plaques métalliques annulaires sont alternativement stratifées.
